# EUROPEAN PATENT SPECIFICATION

(11) **EP 3 695 339 B1**
(45) Date of publication and mention of the grant of the patent: **07.06.2023**
(21) Application number: 18785915.2
(22) Date of filing: 09.10.2018
(51) Int. Cl.: G06F 21/62, H04L 9/40, H04L 9/00, H04L 9/32

(54) **METHOD AND SYSTEM FOR ASYNCHRONOUS TRACEABLE DATA SHARING IN A COMMUNICATION NETWORK**
VERFAHREN UND SYSTEM ZUR GEMEINSAMEN ASYNCHRONEN RÜCKFÜHRBAREN DATENNUTZUNG IN EINEM KOMMUNIKATIONSNETZ
PROCÉDÉ ET SYSTÈME POUR PARTAGE DE DONNÉES TRAÇABLE ASYNCHRONE DANS UN RÉSEAU DE COMMUNICATION

(30) Priority: 09.10.2017 EP 17195509
(43) Date of publication of application: 19.08.2020
(73) Proprietor: KYC3 S.À.R.L., 2449 Luxembourg (LU)
(72) Inventor: Grant, Jedediah S., 2449 Luxembourg (LU)
(74) Representative: Wagner, Jean-Paul
(86) International application number: PCT/EP2018/077436
(87) International publication number: WO 2019/072823

(56) References cited:
- WO-A2-2014/182858
- US-A1- 2015 163 206
- US-A1- 2017 206 523

## Description

### Technical field

The invention lies in the field data communication networks, and relates in particular to secure data sharing between nodes in a data communication network.

### Background of the invention

Services that used to be offered exclusively in brick-and-mortar stores, relying on the physical presence of both service providers or retailers, and users or customers, are nowadays being complemented or substituted by digitized service offerings.

In order to provide user specific services online, personal data is almost routinely collected, ranging from personal identification data, to credit card numbers or web browsing activity. Exposing personal data, without being able to trace who uses them or how they are used, implies a threat to privacy. In particular in financial or legal services, due to compliance regulations and to the personal nature of the services offered, sensitive data needs to be collected via mostly public data communication channels. While central so called trusted third parties provide authentication services and try to offer secure online handling of personal data, any centralized system inherently exposes collected data to a single point of attack. Hackers and data or identity thieves are well aware of the weak points in such a communication system. As a result of this, and in spite of a generally perceived rise in the awareness of the problem in the larger public, personal, financial and governmental leaks have grown in size and frequency over the past years. Recently, a major credit reporting agency, disclosed the theft of over 143 million Social Security numbers from its centralized data storage system. Thieves are already selling this data on the dark web. This situation is largely due to the unavailability of a technical infrastructure which would allow for secure and traceable transfer of data such as personal identification data or others. It has proven challenging to build a technical infrastructure which would be able to provide a user with control over the information she/he shares, and with whom the information is shared, without the involvement of third parties.

Patent document US 2015/163206 A1 discloses a customizable framework that allows for asynchronous sharing of data between two nodes in a communication network.

Patent document WO 2014/182858 A1 discloses a method for sharing encryption keys among nodes in a communication network.

Patent document US 2017/206523 A1 discloses Systems and methods for digital asset security ecosystems, including the use of Blockchain technology.

### Technical problem to be solved

It is an objective to present a method and device, which overcome at least some of the disadvantages of the prior art.

### Summary of the invention

In accordance with a first aspect of the invention, a method for asynchronous traceable data sharing between a sharing node and at least one recipient node in a communication network as defined by claim 1 kis provided.

The sharing node may store said received public key in a local key repository.

Preferably, at step c) the sharing node may encrypt at least part of said data with the recipient user entity's public key.

Preferably, at step c), the sharing node may generate, using said recipient user entity's public key, a symmetric session key, encrypt said session key with said user entity's public key, and encrypt part of the shared data using the symmetric session key. Preferably, the session key which is encrypted with the recipient user entity's public key, and said data, which is encrypted with said session key, may be transmitted to said gatekeeping server.

Preferably, at least part of said data and/or metadata may be cryptographically signed using the sharing user entity's private key prior to transmitting it to the first gatekeeping server.

The metadata may preferably comprise any of a hash of the encrypted data, a hash of the decrypted data, a hash of at least part of the metadata, or any combination of these.

It may further be preferred that the metadata comprises a validity timestamp comprising an indication of time and/or date, and the first gatekeeping node may be configured to not provide access to any recipient node, once the time corresponding to said timestamp has lapsed. The timestamp may preferably be generated by a communication node in the communication network Preferably, the first gatekeeping node may further be configured to remove the corresponding encrypted data from said data store once the time corresponding to said timestamp has lapsed. Preferably, the repository and the metadata store may use the same data structure, i.e. the same distributed ledger to store their respective content.

Preferably, data and/or metadata transmitted from a communication node to the gatekeeping server may comprise a header field indicating the type or kind of data/metadata that is transmitted. Based on this data, the gatekeeping server may take appropriate actions on reception of the corresponding transmissions.

According to another aspect of the invention, a gatekeeping method in a commuication network configured for asynchronous traceable data sharing between a sharing node and at least one recipient node as defined in claim 14 is provided.

In accordance with another aspect of the invention, a computer configured for carrying out the method according to aspects of the invention is provided by claim 15.

By using the measures proposed by aspects of the invention, it becomes possible to reliably share data, in the shape of messages and/or documents, asynchronously between nodes in a communication network. The encrypted data is stored in a high-performance database, and only the intended recipient is capable of decrypting its content. Data sharing is traceable as an immutable metadata store, preferably implemented by at least one blockchain, records any cryptographically signed data sharing transaction for further verification, proof of data possession or auditing by third parties - without providing access to the data itself, which only the intended recipient(s) has access to. The proposed solution is scalable as it does not have to rely on a single, ever growing blockchain. A plurality of blockchains may be used, for example one per offered service, as the transaction volume or shared data volume requires. The owner of shared data remains in control over which entity in the communication network has access to which part of the shared data.

The technical infrastructure provided in accordance with aspects of the invention allows to deploy secure data sharing applications in many areas, including but not limited to financial transaction services. The infrastructure provided by the invention may be thought of as a real mountain range with vigilant border guards all around. Protected inside these mountains each user has their own secure bank vault full of safety deposit boxes. A user can put copies of their documents into different boxes and with special keys. Each key is unique and can be share them separately with the users that are trust and who need to know. Using this special key, the recipient user can access the vault and view the information that has been shared with them, and nothing else. If a user decides to revoke access, the documents vanish from the box and the lock on the box is changed. According to aspects of the invention, a user's key is a 4096bit RSA (Rivest-Shamir-Adleman) key. While other keys may as well be used, cracking this key is very hard. Only the authenticated user can decrypt the information when she/he needs to share it.

According to aspects of the invention, the proposed platform's shared cryptographic ledger records transactions, identities, and trust levels in a way that is verifiable and certifiable, and anonymous to everyone, including the operator of the platform itself. The platform provides instant, secure trust assessment for multi-counterparty interactions, without exposing its users' personal data to anyone. The system simplifies the acquisition and delivery of digital and physical services, while protecting users from advertisers, hackers, and fraudsters.

The proposed system/platform works, in accordance with some embodiments, across multiple deployments transparently, so users can use the same trust model to interact with any deployment instance. User certifications are portable between deployments of the system and verifiable by users that other users choose to share them with. Users can setup different profiles, or personas, to interact with different entities associated with different nodes in the communication network. Their activity with one counterparty remains separate from interactions with others. Data and interactions are always private; however, users always have the choice of sharing this information. Users or automated verification services can confirm trusted friends and their friends can vouch for them. The proposed platform is a blockchain agnostic distributed layer of trust and transaction.

The technical solution brought about by aspects of the invention allows for the ability to onboard a client in a few minutes online to a new service, without any paper, and it allows to know the client thoroughly. The process happens digitally and transparently, in an experience that is easy and smooth for the client. For example, the client's identity, through securely shared documents, may be validated and checked and risk scored against a wide range of risks, such as sanctions, political exposure, negative media, country risk, automatically. Further, there are no data protection issues to worry about since the data does not have to be maintained once the shared data has been validated and the corresponding client is on board.

As the proposed method uses cryptographic protocols, it allows users, i.e., people and institutions alike, to create and own a trusted record that encompasses digital identity (who they are), trust relationships (who they trust) and proof of activities (what they've done).

Users of the platform are in full control and ownership of their data, as only they are able to decrypt their data freely at any point in time. According to aspects of the invention, data recipients, with whom a user chooses to share data, may only be granted time limited access to the shared data. Nothing is ever exposed to external parties without a user explicitly making the data available to the selected parties. Because data is protected by cryptography, no other party can see their data, not even an entity operating platform.

In accordance with applications using the technical features in accordance with aspects of the invention, the proposed platform allows individuals and companies to assert facts (share data, for example documents) about themselves and other parties, and to attest (i.e. verify the data by the recipient user) those assertions. This is useful for financial institutions as it can significantly lower the cost of client onboarding because of KYC (know-your-client) regulations. In other applications building on the technical features in accordance with aspects of the invention, the proposed system provides a distributed platform of trusted facts. For example, employees of a company could assert that they are sick. A medical doctor could attest to the sickness by providing a digital certificate on the system. The assertion and corresponding attestation could then be consumed by the human resources department for further use such as social security cover, etc....

Users of the proposed system are only identified by their public keys (analogous to how Bitcoin works) and can assume multiple personas/aliases which are basically public keys derived off their root key. Personas are useful to use when facing external parties. For example, a person may be a student but also client of a bank. A university will require a different subset of information than the bank, so that the user can decide which data is shared with which recipient. In addition, the user may not want the University to know that she/he is a client of a specific bank. By using different personas (i.e. a role) privacy can be managed in dedicated silos. The history of transactions can be revealed to parties on a persona basis, e.g. a person could reveal their good records with a bank while requesting a mortgage at a different bank.

### Brief description of the drawings

Several embodiments of the present invention are illustrated by way of figures, which do not limit the scope of the invention, wherein:
- figure 1a provides a workflow chart illustrating the main method steps in accordance with a preferred embodiment of the invention;
- figure 1b illustrates the data flow among different entities involved in a method according to a preferred embodiment of the invention;
- figure 2 is a schematic illustration of a system implementing a method in accordance with a preferred embodiment of the invention;
- figure 3 provide an illustration showing different user entities in accordance with a preferred embodiment of the invention;
- figure 4 is a schematic illustration of a gatekeeping server in accordance with a preferred embodiment of the invention;
- figure 5 shows the main steps involved in the submission of data from a sharing node to a gatekeeping server in accordance with a preferred embodiment of the invention;
- figure 6 shows the main steps involved with registering a sharing node/recipient node with a gatekeeping server in accordance with a preferred embodiment of the invention.

### Detailed description

This section describes the invention in further detail based on preferred embodiments and on the figures. Similar reference numbers will be used to describe similar or the same concepts throughout different embodiments of the invention. For example, references 100, 200, 300, 400 and 500 respectively denote two different embodiments of a gatekeeping server in accordance with the invention.

It should be noted that features described for a specific embodiment described herein may be combined with the features of other embodiments unless the contrary is explicitly mentioned. Features commonly known in the art will not be explicitly mentioned for the sake of focusing on the features that are specific to the invention. Several technical concepts will be used throughout the description, their meaning within the framework of the present invention is outlined here below.

A "*blockchain*" is a digitized, decentralized, public ledger of transactions. The technology has been developed in the context of digital currencies and further details can be found in S. Nakamoto's seminal paper (https://bitcoin.org/bitcoin.pdf), which his hereby incorporated by reference in its entirety. A blockchain, as originally designed, is a constantly growing structured data store, which grows as 'completed' blocks (the most recent transactions) are recorded and added to it in chronological order, it allows participants to keep track of digital transactions without central recordkeeping. Each peer node of a set of computers receives gets a copy of the blockchain, which is downloaded automatically. Originally developed as the accounting method for the virtual currency called Bitcoin, blockchains - which rely on distributed ledger technology, DLT, - are appearing in a variety of applications. The technology is primarily used to verify transactions, within digital currencies though it is possible to digitize, code and insert practically any data into the blockchain. Doing so creates an indelible record that cannot be changed; furthermore, the record's authenticity can be verified by the entire community using the blockchain instead of a single centralized authority. A centralized entity would have to be trusted by everyone using the ledger, and it would present a single point of attack to third parties, irrespective of the security measures that would be implemented to protect the data stored thereon. A block is the most recent part of a blockchain, which records some or all of the current or most recent transactions. Once completed, a block goes into the blockchain as a permanent database. Each time a block gets completed, a new one is generated. In the original design, there is potentially a countless number of such blocks in the blockchain, cryptographically connected to each other (like links in a chain) in proper linear, chronological order. This aspect implies that the originally designed blockchain may run into scalability issues as the chain does not stop growing as long as transactions are logged. Every block contains a hash of the previous block making it impossible to change any historical block without having to change all subsequent blocks as well. A consensus mechanism ensures that all nodes maintain an accurate consensus of the real records and malicious or erroneous attempts to change the history are discarded. Because of this, blockchains can create trust in a trustless environment.

The blockchain was originally designed so these transactions are immutable, meaning they cannot be deleted or altered. The blocks are added through cryptography, ensuring that they remain meddle-proof: the data can be distributed, retrieved, consulted or verified, but not altered.

A "*hash*" or hash value of a given set of data is the result of applying a one-way hashing function on said data. A hash function is any function that can be used to map data of arbitrary size to data of a fixed size. A cryptographic hash function allows one to easily verify that some input data maps to a given hash value, but if the input data is unknown, it is deliberately difficult to reconstruct it by knowing the stored hash value. MD5, SHA1 or SHA2 are for example cryptographic hash functions that are well known in the art.

"*Public-key cryptography*", or asymmetric cryptography, is any cryptographic system that uses pairs of keys: public keys which may be disseminated widely, and private keys which are known only to the owner. Data encrypted by a user with her/his recipient's public key, may only be decrypted using the corresponding recipient's private key. Public-key cryptography allows to accomplish two functions: authentication, where the public key verifies that a holder of the paired private key sent the message, and encryption, where only the paired private key holder can decrypt the message encrypted with the public key. In a public key encryption system, any person can encrypt a message using the receiver's public key. That encrypted message can only be decrypted with the receiver's private key. The strength of a public key cryptography system relies on the computational effort (work factor in cryptography) required to find the private key from its paired public key. In practice, longer keys are more secure and it must be computationally infeasible to calculate the private key from the public key or any output from the algorithmic application of the private key. Effective security only requires keeping the private key private; the public key can be openly distributed without compromising security. Public key cryptography systems often rely on cryptographic algorithms based on mathematical problems that currently admit no efficient solution, particularly those inherent in certain integer factorization, discrete logarithm, and elliptic curve relationships. Public key algorithms, unlike symmetric key algorithms, do not require a secure channel for the initial exchange of one or more secret keys between the parties. Because of the computational complexity of asymmetric encryption, it is usually used only for small blocks of data, typically the transfer of a symmetric encryption key (e.g. a session key). This symmetric key is then used to encrypt the rest of the potentially long message sequence. The symmetric encryption/decryption is based on simpler algorithms and is much faster. In a public key signature system, a person can combine a message with a private key to create a short digital signature on the message. Anyone with the corresponding public key can combine a message, a putative digital signature on it, and the known public key to verify whether the signature was valid, i.e. made by the owner of the corresponding private key. Changing the message, even replacing a single letter, will cause verification to fail. In a secure signature system, it is computationally infeasible for anyone who does not know the private key to deduce it from the public key or any number of signatures, or to find a valid signature on any message for which a signature has not hitherto been seen. Thus, the authenticity of a message can be demonstrated by the signature, provided the owner of the private key keeps the private key secret. For example, the XAdES, XML Advanced Electronic Signatures, standard defines properties that a cryptographic signature must provide for being used as an equivalent to personal written signatures.

A "*node*" or "*server*" in a communication network is typically implemented by a computer, or computing device. A computer comprises a data processor, which is generally programmable by computer programs or software to implement different functions or to run various algorithms. A data bus functionally interconnects the data processor and volatile memory elements, such as Random-Access Memory, RAM, persistent storage, such as Hard Disk Drives, HDD, or Solid-State Drives, SSD and to networking interfaces. A networking interface generally implements a communication stack and allows the computer to transmit and received data from other computers, via a data communication channel of a communication network. The data communication channel may be wired or wireless, and corresponding networking interfaces are well known in the art. The computer may further have remote access, via the communication network, to storage means. The computer may further comprise or be connected to a display or other output devices (such as audio systems), and to input devices such as a keyboard, a computer mouse, or a speech or gesture interface. While on the one hand, a "*node*" in a communication network can be a highly integrated mobile battery-powered device such as smartphone having cellular data network access, a "node" may also be implemented by a desktop computer, a network server, or even a collection of computers or network servers configured to share their respective physical resources in order to provide the requested services. Alternatively, a computer may also be a virtual entity using only a subset of the physical resources that a computing device has at its disposal. It will be supposed in what follows that a "node" comprises a secured memory element that is suitable for storing at least one cryptographic private key, access to which is made conditional on an authentication of the user associated with the private key. Preferably, strong authentication, such as two-factor authentication methods or biometric authentication methods are required for a user to be able to access the secured memory element.

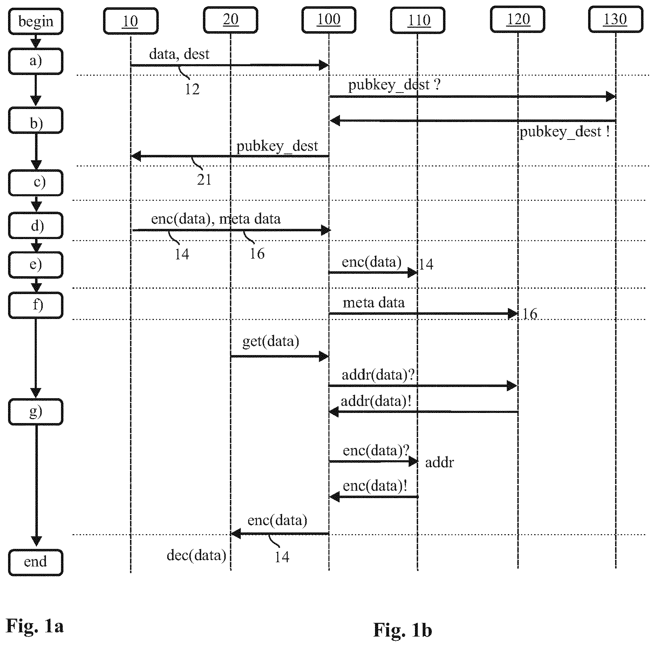

Figure 1a illustrates the main method steps a) to g) in accordance with a first embodiment of the invention, while figure 1b provides a timeline showing the method steps realized by different entities involved in the method in time, which is shown from top to bottom.

A gatekeeping server 100 has access, either locally or remotely through a data communication channel (wired or wireless) to a data store 110 for storing encrypted data items such as documents or messages, and to a metadata store 120 for storing metadata describing at least some of the data that is stored in data store 110. The metadata may preferably be thought of as an envelope, it provides for example an address of a sender, at least one recipient, a time or date at which data was sent, an address pointing to a location in the datastore which holds the transmitted data, and possibly a high-level description of the data. The gatekeeping server 100 further has access to a repository of public keys associated with user entities. These are cryptographic public keys, the corresponding private keys being held by the respective users themselves. Users identify and authenticate themselves, and register their public keys with the gatekeeping server 100 prior to being able to use the services provided by the gatekeeping server. Any access to the data store 100, metadata store 120 or repository 130 is exclusively achieved through the gatekeeping server 100. The gatekeeping server is accessible on a public network, such as the Internet. It shields the data store, metadata store and repository from the public network, which need not be accessible therefrom. The gatekeeping server may additionally keep a message index, in which metadata locations on the metadata store may be recorded, in order to speed up and to facilitate locating and retrieving metadata for any given transaction.

While the data store is preferably implemented by a high-performance structured database, the metadata store 120 is preferably implemented by a blockchain, which is operated by and stored on several computing nodes that are not necessarily accessible on the public network. Storing the metadata, i.e., the envelopes in which data that is transmitted through the gatekeeping server 100 over time, in an unalterable blockchain, provides a reliable trace of all activities of different users on the system. This possibly includes, if the sending user allows so, a high-level description of the data that the user has transmitted or possesses.

At the first step a) of the illustrated method, a sharing node 10 transmits a request 12 to the gatekeeping server 100 via the communication network. The sharing node may for example be a smartphone holding a private key that is associated with a user entity, the public key of which is supposed to have been registered previously in the repository 130. The sharing node intends to transmit data it holds, for example a digital photograph, with a recipient user. The object of the request is for the gatekeeping server to allow the sharing of said data with a recipient node associated with the recipient user entity. At step b), the gatekeeping server receives the request 12 and checks whether the public key of the corresponding recipient user entity has been registered in the repository 130. If that is the case, the public key is retrieved from the repository 130 and transmitted back 21 to the sharing node 10. If the recipient user entity has no public key in the repository, the sharing node's request 12 is declined (not shown) and the sharing node may for example receive a message indicating that the recipient user entity should be invited to first register with the service.

Once the sharing node has obtained the public key 21 of the recipient, the data it intends to transmit is encrypted using said key at step c). From that moment on, only a recipient node holding the corresponding private key is enabled to decrypt and access this specific copy of the data. Preferably, the sharing node first generates a random one-way symmetrical cryptographic key. The symmetric key is encrypted with the public key, while the data is transmitted using the public key indirectly, through encryption with the session key. Using the appropriate private key, the recipient node will be able to decrypt the session key, and with the so-recovered session key, it will be able to decrypt the data. If data is to be shared with multiple recipients, the session key may be encrypted with the corresponding public keys.

Together with a set of metadata 16, the encrypted data 14 is transmitted to the gatekeeping server at step d). The metadata may for example provide information about the content of the data, i.e. "photograph of user X captured using the smartphone", an identification of the corresponding sharing user and of the corresponding recipient user entity, and for example a validity date. Any data transmitted towards the gatekeeping server is preferably transmitted using a transport layer security, TLS, protocol. Preferably, the metadata comprises cryptographic hashes of their respective content, so that a third party may be assured that the data emanates from the sharing node and has not been tampered with. Preferably, the hashes may be salted hashes (such as is described in RFC 2104), so that they can only be audited or reviewed by parties with whom the owner has shared the appropriate secret key (salt). At steps e) and f) respectively, the gatekeeping server 100 receives the data 14 that has been encrypted with the recipient's public key, and the corresponding metadata 16. The encrypted data 14 is stored in the data store, preferably at an indexed location that allows for quick retrieval if required, while the metadata 16 is stored in the metadata store 120, i.e., preferably in the distributed unalterable ledger. Before storing the metadata, the gatekeeping server adds the address of the stored encrypted data's location in the data store 110 to the metadata. It should be noted that the gatekeeping server is not aware of the actual content of the data that is stored in the data store 110 at any point in time, it cannot access it for lack of possessing the accurate private key.

Using the gatekeeping server 100 for managing the actions involved with storing the shared data allows for asynchronous sharing. At a later time at step f), the gatekeeping server 100 indeed receives a request to retrieve the data from the recipient node 20. According to preferred embodiments, prior to that, the gatekeeping server 100 may have informed the recipient node 20 that sharing node 10 has indeed posted data to be shared with the recipient node 20, a messaging queue may be used to that effect. At step g), at reception of the retrieval request, the gatekeeping server 100 fetches the corresponding metadata, i.e., data envelope, from the metadata store 120. It contains a pointer to the location in the data store 110 where the shared encrypted data is to be found. After having retrieved this information, the gatekeeping server 100 fetches the corresponding encrypted data from the corresponding location in the data store 110 and transmits it to the recipient node. Having access to the recipient user entity's private key, the recipient node is able to decrypt the received data and access it. If the metadata 16 indicates a validity date for the encrypted data 14, the gatekeeping server 100 is preferably configured to grant access to the data 14 only if the recipient node's retrieval request is received before said validity date has lapsed. After this time limit, the recipient node may delete the data from the data store and add a corresponding entry to the metadata store 120.

The metadata transmitted by the sharing node 10 to the gatekeeping server 100 may further comprise an identifier that specifies one of several message, service or data types that are recognized by the gatekeeping server 100. The metadata may for example indicate that the data relates to "service Y". This allows the gatekeeping server to possibly maintain multiple metadata stores (e.g. blockchains), which remain independent one of each other, and each one corresponding for example to a specific message (or service) identifier. This allows to avoid the scalability issues encountered with using a single ever-growing blockchain structure.

It should also be noted that multiple gatekeeping servers may access the same data and metadata stores as part of a decentralized set of nodes working on the same instance. In accordance with a preferred embodiment, the gatekeeping server also implements a message queueing system to ensure guaranteed delivery of all messages handled by the gatekeeping server.

It should be noted that any node in the communication network may be a sharing node or a recipient node at any point in time. Complex relationships among nodes may be established, yet remain traceable due to the keeping of a trace of all data transactions in the metadata store(s) 120. Further, a sharing node may choose to share data with itself. the corresponding data is securely stored in the data store and metadata store, for later secure access by the sharing node itself. This provides a secure storing location for any sensitive data, such as the backup and recovery information needed to reconstruct the node's private store should the corresponding hardware be lost or damaged.

Further, a sharing node may transmit data to a recipient node in order to request a service from the recipient node, while the recipient node may offer that service, for example conditionally on further steps. In accordance with a preferred embodiment of the invention, the recipient node may for example provide the service of attesting to the validity of the data. This may be in its simplest form an attestation that the recipient's node's user knows and trusts the sharing node's user personally and therefore signs the corresponding shared data cryptographically before resubmitting it via the gatekeeping server 100. In more elaborate embodiments, the recipient node may for example attest to the identity of a person shown on a photograph. If the data it receives from the sharing node via the gatekeeping server 100 corresponds to the identity of the corresponding sharing user entity, the recipient node may generate attestation data including a cryptographic signature, attesting that the shared data truthfully depicts the sharing node's user. In turn, the recipient node 20 may then share the attestation data through the gatekeeping server 100 with either the original sharing node 10 or with third parties. The data store 100 and metadata store 120 will keep a trace of the attestation data, stating that "recipient node 20 attests that sharing node's 10 user is in possession of a valid user photograph". If a third party requires such photograph, and trusts the attestation services of the recipient node 20, the sharing node 10 may share only the attestation data with the third party through the gatekeeping server 100. Attestation data may be provided for atomic parts of the data: the user's birth date, driving license validity, hair colour, judicial record, etc. depending on the content of the originally shared data. The third party does not need to access the original data, e.g. the photograph itself. It should be noted that this is merely a non-limiting example application enabled by the method in according with aspects of the invention.

In another embodiment, upon reception of a service request from the sharing node 10 via the gatekeeping server 100, the recipient node 20 may respond, through the gatekeeping server 100, by providing a list or dossier of required data attestations (and possibly underlying data assertions as well), including addresses and/or public keys of the corresponding communication network node, indicating from which nodes in the communication network these required data attestations may be obtained, in order to be able to provide the requested service. Through different instances of the method in accordance with aspects of the invention, these attestations may then be gathered by the original sharing node 10. As each data transaction is logged in the distributed unalterable ledger 120, once the corresponding dossier will have been completed, the corresponding attested data items may be shared with other nodes in the future, thereby facilitating service interactions between the nodes in the communication network.

As an attestation may be considered an assertion from the originating node, it is also possible to "chain" requirements in order to create a workflow process of input/output requirements to create complex state systems with multiple final possibilities.

In what follows a preferred embodiment in accordance with aspects of the invention will be outlined, without the invention being limited thereto. The system implementing the method in accordance may at some points be referred to as "Peer Mountain". A Peer Mountain instance involves a gatekeeping server in a communication network. It also comprises a metadata store, data store and repository as outlined for embodiments described here above. It may further comprise replicas or copies of some of the different components, at different physical deployment locations. A Peer Mountain is configured and able to implement the method as described for embodiments described here above. It allows for asynchronous traceable data sharing between node in a communication network, wherein data may comprise a "message" or a "document", a "document" being of any type, including an "assertion", i.e. a fact stated by a node, or an "attestation to an assertion", which asserts the veracity of an "assertion", possible after thorough checks thereof.

There are several key concepts referred to throughout this embodiment.

**Identity** - The identity consists of the core key pair of the individual and the data set that includes all attributes and documents of the individual. The core key pair is permanent and if abandoned the identity and all linked personas will be lost.

**Personas** - Personas are the representations or aliases of identity in context vis-à-vis a third party. Specific attributes of the identity can be exported to the persona as required. Personas can represent an identity in a role or can represent a collective group, such as a company. Personas may represent another persona and may thus be used to replicate any real-world corporate structure of legal and physical entities.

When shared, a persona has a key-pair per linked identity or persona. Either a legal or an unofficial organization may be represented in this manner. The creating identity of the persona has full authority over the persona, although this may be handed to another signatory later on. Other invited identities may have differing rights such as Invite, Remove, Commit (sign), Attest and Assert.

A persona may also have a role when acting for another persona, e.g. Owner, Officer, Representative, or Employee. An identity or a persona may both be thought of as instances of a "user entity" in the context of the invention.

**Signature/Signing** - Refers to XAdES-T or equivalent digital signatures generated on the device/node in which the private key is secured in a secure memory element. These signatures are prefereably compliant with major jurisdiction digital signing legislation (eIDAS, ZertES, DSS) and are legally binding.

**Message/Index Entry** - Entries written to the shared ledger (metadata store) system. Each entry includes a public header and a, normally, encrypted body. The message body may refer to specific documents as attachments (i.e. data). Public messages do not encrypt the body.

**Assertion** - An assertion is a self-declaration message. Identities and personas make assertions upon which others make attestations.

**Attestation** - An attestation is a message that confirms a message from a third party on the chain. Attestations form the basis of risk assessment towards a persona. For example, negative attestations from trusted sources will indicate high risk while positive attestations from untrusted sources may not reduce risk. An attestation is the object of a data sharing transaction between communication nodes. **Request** - A request is a message that asks a third party to make an assertion or attestation. A request is the object of a data sharing transaction between communication nodes.

Document - A document is a digital object that has been signed by a persona with an XAdES-T signature object. Documents are always transmitted and stored in encrypted format (container), they are the object of a data sharing transaction between communication nodes.

**Form** - A template used to generate an Assertion. Forms are defined using XForm definitions and once completed are digitally signed to become documents.

**Service Offering** - The basic configuration object used by a service provider is a service offering. A a service offering may be communication or shared between communication nodes by using the method as claimed. This consists of three elements:
- *commercial offer* - facultative data describing the service, this would normally be considered the "sales pitch"
- *dossier template* - data structure describing all required information (documents and assertions) and agreements (attestations and forms) that must be satisfied for the service to be delivered,
- *risk template* - a risk profile against which the service consumer is scored, exceptions will trigger alerts

**Dossier** - A collection of required attestations and assertions that allow service delivery.

**Address** - A short printable code that identifies the Persona in use. May also be encoded via QR code, NFC or other device for transmission.

**Trust Vector** - An address (identity or persona) may trust another address. Trust is granular and may be defined by a set of rules and values. Trust is private and personal.

**Trust Rules** - Simple rules that define the authorization that a persona grants a signatory.

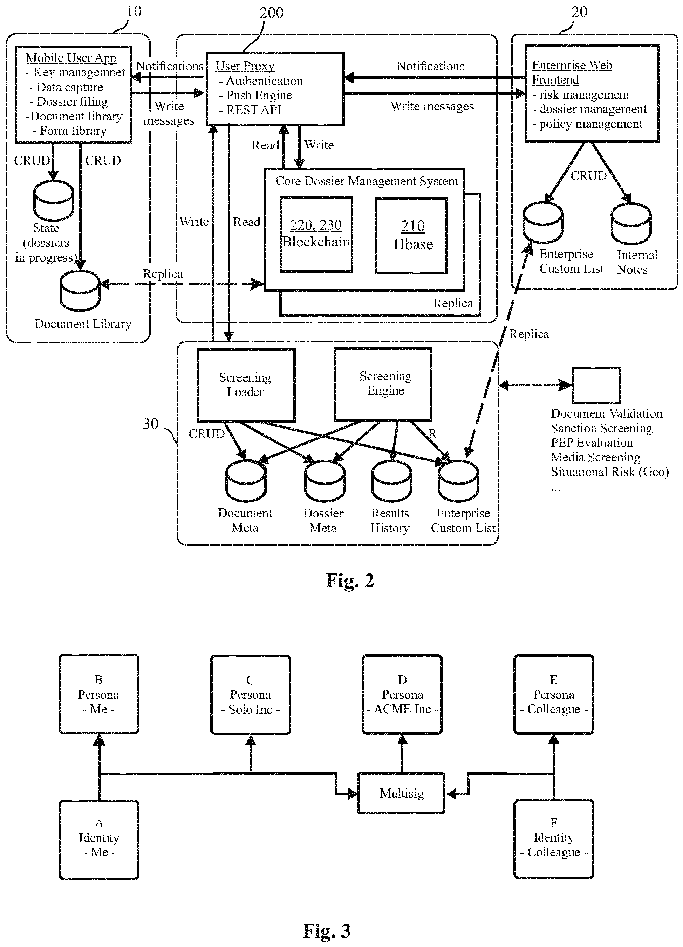

Figure 2 illustrates an example of an architecture as it may be used in a Peer Mountain instance. The system comprises a gatekeeping server 200 having access to at least one data store 210 keeping encrypted data objects and at least metadata store 220, implemented by a distributed ledger such as a Blockchain. The key repository 230 is in this embodiment collocated with the metadata store 120, i.e., cryptographic keys associated with user entities (identities or personas) are registered on the Blockchain, and may be retrieved therefrom by the gatekeeping server 200 on request.

Different nodes in the communication network 10, 20, 30 share data amongst themselves in a secured traceable and asynchronous manner by accessing the gatekeeping server 200. Any of the nodes 10, 20, 30 may be a sharing node or a recipient node, depending on the application and scenario under consideration. As illustrated communication node 10 may be a mobile computing device associated with a user entity, keeping the corresponding encryption key(s) in a secured memory element and having CRUD (create, read, update, delete) rights and access to different databases, storing documents that are relevant to the user entity. The communication node 20 may be a user entity offering a service, and requiring a dossier of data to deliver the service. It may have CRUD rights on databases for storing documents that are relevant to the user entity. The communication node 30 may be an attestation engine specialized in providing attestation, i.e. in checking the veracity of the content of shared data, and to share the resulting attestations with third party. It may further rely on external third parties such as Document Validation Services, Sanction Screening or others to achieve these tasks.

The platform operates using a blockchain ledger 220 and a distributed storage solution 210. The Core Dossier Messaging System comprising these stores can be deployed as required within a financial institution and trusted service providers. In accordance with this embodiment, each party will have a complete copy of the chain and may have up to a complete copy of the off-chain distributed storage (e.g. HBase).

At the blockchain level, the users writing to the chain are the User Proxy agents, i.e. the gatekeeping server 200, not the actual users or communication nodes associated therewith. By design, all documents/data and most meta-information is encrypted/decrypted only at the end-points and never revealed in motion or at rest.

A "container" is the encrypted object containing the document(s), meta(s) and signature(s). In accordance with this embodiment, any the container is a set of structured data that is transmitted from a communication node 10, 20, 30 to the gatekeeping server 200, for sharing with other nodes. The container hash provides identification (object is unique) and validation (object is intact) functions for the transport and storage messaging systems (that don't have the decryption key to see the other elements). It is the identifier that is verifiable to all participants in the system. For example, this is the hash that will be used in the storage URI; any read/fetch function could validate the hash before returning the container object. Each time a document is shared, a new container will be provided to the receiving parties (their public keys are used to build the ACL), so the same meta+doc+sig payload may appear several times in the system in different containers.

The document hash is used to identify and validate the document object. This is used by participants/nodes who have been granted access to the container. It allows the verification of the original object (of course the signature does that also) and provides a unique key for the object's storage and reference within the encrypted space among participants. This hash validates and identifies the document form. For example, if the document in question is a photograph of a passport, the hash will validate/identify that file. If one considers another photograph of the same passport, it will have a different hash.

The meta hash identifies the meta-data/or rather meta-information from the document. This identifies and validates the document content. For example, considering the passport photos above, they will have the same MRZ (machine readable zone) and this will hash to the same result, so even though one has two photos, with the meta hash one can determine that it is the same document. As another example, one could have documents that look totally different but have the same content. For example, one could print a contract twice in different fonts (or even a handwritten copy), but with the exact same text. If the meta for this document was the document number, the names of the parties and the date, which were reliably extracted from the document with OCR and well formulated into the meta structure, then they would have the same meta hash.

The document and meta hashes can be shared in the system with actors (systems/nodes) that do not have access to the contents. This provides audit proof of document existence, e.g. an auditor can see that a passport type document with hash X was submitted at a specific date - if necessary, he could later request access to the document and use the hash to verify that the document is the same. The meta hash can be used by the system to detect duplicate documents, for example if the meta hash of a passport is already attached to a core identity, then we could prevent that passport from being attached to another identity.

### Identity, Digital Signature, and Digital Document Considerations

### Identity and Persona Identification

Each Identity has at its core an RSA 4096 key pair for the reasons outlined in "signature verification performance vs. ECDSA, compatibility and proven production use", Ref: http://bench.cr.yp.to/results-sign.html. The public key is hashed to generate an address. This address is used in messages and solicitations (QRCodes) for messages. The hash is calculated much like the Bitcoin address and appears, for all intents and purposes, identical to a Bitcoin address. However, this is not the case as the hashing method has been slightly modified such that PEER MOUNTAIN addresses will not validate as Bitcoin addresses. The exact procedure is as follows:
1. The public key of the pair is hashed SHA-256.
2. The resulting Hash is further hashed with RIPEMD-160.
3. Five bytes are prefixed to the resulting RIPEMD-160 hash. Byte 0 identifies the PM protocol version in use. Bytes 1-4 identify the PM deployment.
4. A checksum is calculated by SHA-256 hashing the extended RIPEMD-160 hash, then hashing the resulting hash once more. Double hashing (SHA256(SHA256(extended RIPEMD-160)) prevents "length extension attack" on address/checksum-
5. The last 4 bytes of the final hash are added as the trailing 4 bytes of the extended RIPEMD-160 hash. This is the checksum.
6. The resulting object is Base58 encoded.

### Digital Signature Management

Application key pairs (as opposed to blockchain system key pairs) are generated on the end device/node, for example sharing node 10, and used from that device only. Each Identity and Persona has a dedicated keypair and address. These are stored in a secure storage in the device and decrypted only when the user authenticates with the symmetric key to this storage.

### Object/data Identification and Management

Objects are identified by 3 hashes which permit the identification of duplicate or highly similar objects at 3 levels. These are the Container Hash, the Object Hash and the Meta Hash.

**Container Hash** is the hash of the encrypted container object. Obviously, this will be different for each Object-Encryption action; this is used to record the container storage (proof of existence and avoidance of duplicate storage) and tie the container to the message that is written on chain.

**Object Hash** is the hash of the decrypted object or data. This permits the validation of the object with respect to tampering and proof of integrity. This can be compared from the original object registration in order to ascertain that the document is valid and legitimate.

**Meta Hash** is the hash of the well-formed non-instance specific meta-data from the object. For example, the Meta Hash of an electronic passport will be the hash of the MRZ content and/or the hash of the RFID content. An object may have multiple Meta Hash results, each identified by the definition of the well-formed meta-data structure without content and the resulting hash of that structure with content. This permits the identification of duplicate logical objects. Using this hash it is possible to detect multiple use of the same document, for example to avoid multiple use of the same passport across root identities.

Attachments (documents) in the system have two **meta-dates:** ValidUntil and RetainUntil. The ValidUntil is the expiration date that is atomic to the document itself or to the process in which the information is used. The RetainUntil date varies on the instance. For the master document, encrypted only with the owner's key, RetainUntil is "indefinite". For all other instances, the RetainUntil date will be set by the Service Offering's Dossier Definition. Object storage is done with simple URI. The well-formed URI should always end in the Container Hash of the object being referenced.

### Information/data Sharing

Each identity maintains its own library of relevant attestation documents. Each is hashed and registered on chain (i.e. in the metadata store) as proof-of-existence and possession. A copy of the repository is copied to the shared storage. Information is shared through messages and attachments.

When a document is shared, the message indicates the validity of the document, either a date in the future or until-revoked. Each time a document is shared with a third party or parties, a copy of it is written to the shared storage space encrypted for the intended recipient(s). When the validity date arrives, the shared space will replace the document with a stub and the document will no longer be available to the third parties. Third parties write attestations of review to the ledger, encrypted so that only required recipients may view.

### Public Data vs. Private Data

The system is designed to expose a minimum amount of data, most of which is pseudo-anonymous. The meaning of the data will be exposed publicly, along with its provenance. For example, a document may be asserted as a Passport with validity criteria and a third party may attest to the assertion. The data being exposed would equate to "this identity has a passport attached that is valid".

### Trust Rules and Action Matrices

Trust rules are used to automate actions that can be taken by a profile. Trust rules are used in two types of matrices the Information Sharing Matrix and the Commitment Action Matrix. The Document Action

### Data Deconstruction (Atomicity)

When attestations are provided, they are given to the owner of the data in atomic form. Each Attestation is digitally signed. The hash of the attestation is logged on the ledger and the content is provided privately to the owner of the object being attested on. Attestations can be shared by the owner and validated by the third party by validating the signature on the object and verifying the hash on the ledger.

For example, a passport would create many different attestations:
- Attestation that the image is good copy of a passport
- Attestation that the photo matches another photo
- Attestation of the content of the MRZ
- Attestation of the elements of the passport individually:
   o Photo
   o Firstname(s)
   o Lastname
   o Date of Birth
   o Place of Birth
   o Nationality
   o Passport Number
   o Passport Expiration Date
   o Passport Issuing Authority

By design, each attestation can be used independently and verified by the party using it, who do not need to see the original document or the rest of the elements.

### Delegation of Personas and Multiple Signatories on a Persona

Figure 3 illustrates how different user entities, i.e., Identities and Personas as used in the presently described embodiment, may be interlinked.

Delegation and Multiple Signatories are accomplished through key signing activity, each such activity being recorded on the key repository, which in this example is the blockchain. A system of trust rules allows complex trust rules to be defined and included in the delegation, for example: "may sign for value of less than 5000 Euros singly or may sign jointly with one of [array of other personas] for any value".

Let S be a signing function, PK be a public key and R be a Trust rule. All operations are XAdes-T signed and recorded on the metadata store, i.e. the blockchain. The following relates to the example of figure 3:
1. *A* generates keypair *B* and asserts ownership of *B* by S_{B}(S_{A}(PK_{B},R)), here R is for example equates to "equivalent to signer".
2. *A* does the same for *C* and *D.*
3. *F* does the same for *E.*
4. *A,* via *D,* invites *F* to participate with *D.* (S_{D}(PK_{F},PK_{D},R)), here R is the proposed trust-rule for *F* over D.
5. *F* generates a keypair D1 and asserts ownership with S_{D1}(S_{F}(PK_{Db}R)), here R is "equivalent to signer".
6. *A,* via *D,* asserts D1 validity over D with S_{D}(PK_{D1},R), here R is the level of delegation *A* gives to *F.*
7. *F* accepts with S_{F}(S_{D}(PK_{D1},R)), here R is from the previous operation. This step may be omitted.
   Trust rule changes can also be used to remove rights to a persona for a specific keypair.
8. *A* resigns *D:* First, steps 4-7 must be performed such that D1 (or another key) has full control *of D,* then *A* writes (S_{D}(PK_{D},R)) with R restricted to "none".
9. Assuming *F* is the other key, *F,* via D1, accepts with S_{D1}(S_{D}(PK_{D},R)), here R is from the previous operation. This step may be omitted.

Delegations messages are used to generate a local data store of accepted delegations. A delegation message may be public, in which case the delegation is global, or may be permissioned, in which case the delegation is only towards those who received the message. Permissioned delegations are similar to a traditional proxy. For example, a persona that is used to possess and manage a stock portfolio could be delegated with buy/sell rights (no withdrawal of funds) to a wealth manager. The delegation messages would only be visible to the owner (delegator) and the wealth manager (delegee), and the service provider (stock brokerage), although the delegation message could be shared by any of these parties later if needed.

### Information Sharing Matrices (ISM)

Each persona will have an associated Information Sharing Matrix. This is a matrix of default actions to take by matching the trust level of the counterparty with the classification level of the information (document). These are byte to byte values, making a 255x255 matrix of values possible; however, the default system should use the standard matrix presented below. The labels for trust level and classification level are arbitrary and can be changed to suit the user.

| ***Trust Level*** / ***Classification*** | **0: Public (Unclassified)** | **10: Private (Confidential)** | **20: Secret** | **30: Top Secret** | **40: Code Word** |
|---|---|---|---|---|---|
| *0: None* | Share | Ask | Deny | Deny | Deny |
| *10: Acquaintance* | Share | Share | Ask | Authenticate | Deny |
| *20: Friend* | Share | Share | Share | Authenticate | Authenticate |
| *30: Close Friend* | Share | Share | Share | Ask | Authenticate |
| *40: Blind Trust* | Share | Share | Share | Share | Ask |

### Commitment Action Matrix (CAM)

Each persona has an associated Commitment Action Matrix. This is an array of trust levels and permissible commitments for a persona. The master keypair (creation keypair) of a persona has the default maximum CAM of 255, no limit. Each delegated persona is assigned a trust level between 0 and 255 in the delegation and may further delegate any level up to the same level as has been assigned.

### Core Dossier Messaging System Specification

### Messaging System

The processing is as follows:
- Client obtains service invitation information and requests service (through sharing the corresponding data on the system)
- Service advertisement message is downloaded and read
- Forms are extracted and prepared for completion
   **∘ Order of forms and standard field names across the service forms are important** as this will allow pre-filling of forms to greatly enhance the UX
- Forms are processed for completion with the XForms processor
- Completed forms are individually hashed and signed XAdES-T using the timestamping service of the gatekeeping server or another RFC3161 trusted timestamping service.
- Signed forms are used as inputs for obtaining Attestations as required by the service definition.
- Documents (completed signed forms) and Attestations are sent as dossier messages
- Additional 3^{rd} party Attestations may be required at the Service Provider Client side in order to grant access to service.

Peer Mountain may a provide a number of standard forms and standard fields so that forms can maximize cross deployment compatibility.

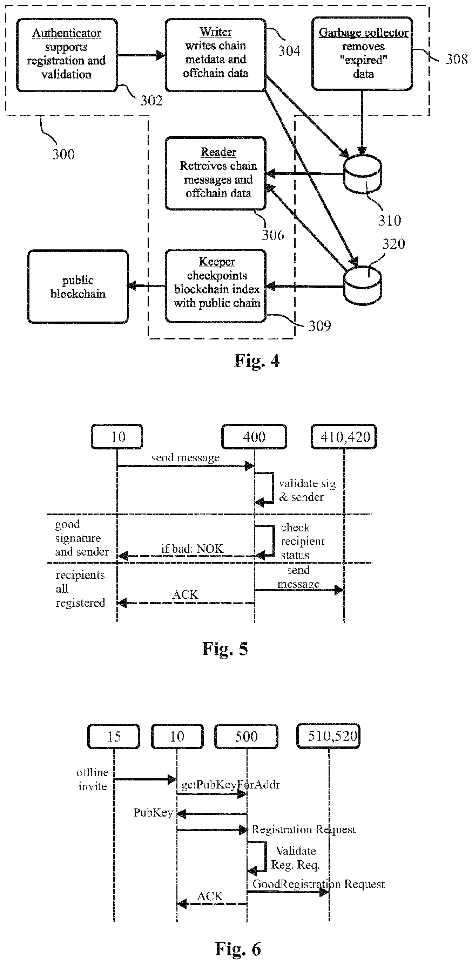

The dossier messaging system run by the gatekeeping server consists of several microservices that federate a blockchain based ledger and a shared storage service. An example implementation of a gatekeeping server 300 in accordance with a preferred embodiment is provided in figure 4. Chaincode/smart contracts may be used to automate some or all Garbage Collector and Keeper services.

The gatekeeping server comprises an authentication module 302 for authenticating a user through an appropriate protocol. Authentication protocols are well known in the art and will not be described in further detail in the context of the present invention. A writer module 304 implements data and metadata writing routines for storing data and metadata respectively in the data store 310 and in the metadata store 320, in accordance with steps e) and f) as outlined in figure 1a. A corresponding reader module 306 is in charge of retrieving stored information, and is used for step g). In this example, a garbage collector module 308 cleans the data store off data that has an associated expiry data that has already lapsed. Garbage collection may for example be scheduled to be performed periodically. An optional keeper module 309 is configured to create checkpoints based on the metadata store 320 contents on a public blockchain for auditing purposes. No transaction information will be directly available on the public blockchain.

### Other Components

Other optional components comprise public blockchain explorer nodes. A Persona can run a public BC replica node. Other optional components comprise rusted secure timestamping service for XAdES-T signatures. A RFC3161 microservice can be deployed, or the PM deployment should be configurable to use an external RFC3161 server.

### Bootstrapping and Cross Deployment References

### Bootstrapping

The system bootstraps using a well formed URI that identifies a user proxy agent address, the correct network identifier, and the invitation nonce (if applicable).

### Cross Deployment References

Profiles (i.e. user entities) can work across multiple deployments; however, each deployment will only see the profile activity on that deployment.

If a client participates in multiple deployments (i.e. multiple gateway servers providing access to multiple distinct data stores, meta data stores and registered user entities), they may wish to share assertions and attestations across deployments, from a source instance to a target instance. Assertions can just be resubmitted to the newly joined deployment (the target instance). Attestations can be transported across deployments and are validated as follows:
1. Original attestation is shared with the requestor on the target instance.
2. If the requestor is not already on the source instance, an invitation to join the source deployment is sent to the requestor.
3. Requestor joins source instance.
4. Requestor validates attestation on the source instance (verifies signatures).
5. Requestor writes attestation (validation) to the target instance.

### Dossier Identification

The dossier key is a combination of the Unique Address of the Provider Persona, the Service Offering ID, the Consuming Persona Unique Address and a Serial number. Therefore, the structure of a dossier address is ProviderAddress:ServiceOfferingID:ConsumerAddress:ConsumerSerialID.

By default, loose documents are stored in the main dossier for a root persona. This is the MyPrivateSpace address. This address is BasePersonaAddress:0:BasePersonaAddress:0.

A 40 byte entropy Dossier Salt value is provided with messages in order to calculate a public Dossier Hash that can be used to identify the dossier consistently in the public ledger.

### Document Identification

Documents are identified by a triple hash set: Container Hash, Object Hash and Meta Hash. The Container Hash is specific to the instance of sharing and identifies the encrypted blob in which the object is stored. The Object Hash is consistent across uses and represents the hash of the document object that is being referred to. Meta hashes are calculated on specific attribute values. Two large structures: the MRZ and vCard may be hashed as is and may then be used to identify existing uses of those items, all other attributes are salted individually and hashed to provide a public hash for the values. Attestations refer to object and meta hashes found in attestations.

### API Specification

An example of an API specification for implementing the functions outlined here above is given for the sake of completeness.
*GetPubKeyFromAddress*
GET /persona
**Arguments**
One of the following arguments:

| **Name** | **Type** | **Description** |
|---|---|---|
| address | str | Peer Mountain Address |

**Return Value**
Json dict with the following keys:

| **Name** | **Type** | **Description** |
|---|---|---|
| address | str | Peer Mountain Address |
| pubkey | str | |
| nickname | str | |
| created at | ISO datetime | |

*GetMessagesFor*
Get
**Arguments**

| **Name** | **Type** | **Description** |
|---|---|---|
| address | str | Peer Mountain Address |
| after | date | Lower bounding date filter |
| before | date | Upper bounding date filter |

**Return Value**
Array of message envelope fields, without message bodies and attachments
*GetMessageByID*
Returns exact or latest version from requested ID. Mode 0 will always return the exact message for the provided hash or an error if not found. Mode 1 will identify the message and return the latest
**Arguments**

| Name | **Type** | **Description** |
|---|---|---|
| messageHash | str | Message Hash |
| mode | int | 0 - exact, 1 - latest |

**Return Value**

| **Name** | **Type** | **Description** |
|---|---|---|
| envelope | bytes | Serialized Envelope |
| mode | int | 0, 1 |

*GetMessagesForDossier*
**Arguments**

| **Name** | **Type** | **Description** |
|---|---|---|
| dossierID | str | Dossier Hash |
| after | date | Lower bounding date filter |
| before | date | Upper bounding date filter |

**Return Value**
Array of message envelope fields, without message bodies and attachments SendMessage
POST /send_message
**Arguments**

| **Name** | **Type** | **Description** |
|---|---|---|
| envelope | bytes | Serialized Envelope |

**Return Value**
None
*GetTimestamp*
POST /get_timestamp
- Refer to RFC3161 for definitions

**Arguments**

| **Name** | **Type** | **Description** |
|---|---|---|
| hash_algo | str | Hash algorithm used |
| hash | str | Hash value |
| nonce | str | Nonce |

**Return Value**
***Time Stamp Token.** A time stamp token is the following field structure signed by the*
*Time Stamp Authority, see RFC3161.*

| **Name** | **Type** | **Description** |
|---|---|---|
| hash_algo | str | Hash algorithm used |
| hash | str | Hash value |
| serialNum | int | Counter |
| genTime | date/time | YYYYMMDD000000Z |
| nonce | str | Nonce |
| TSA | str | public address of the TSA |
| Signature | bytes | signature on above data structure |

Service Components

Service components of the gatekeeping server 300 are illustrated in figure 4.

### Authenticator

The Authenticator supports the methods:
**Join** (invitation token, invitee nickname, invitee id (pubkey)),
   1. Check chain index for existing and unused inviter registration or for previous registration using same
   2. Confirm validity by decrypting and comparing the invitee nickname
   3. If valid, send registration to Writer and send ACK
**Send** (envelope hash, message envelope).
   1. Check envelope hash against rotating cache of hashes (DOS prevention).
   2. Check message sender address against registered (joined) keys on system (access).
   3. Validate message and container signatures in the envelope (authentication).
   4. Send accepted messages to Writer.

### Writer

The Writer supports the method **Write** (ChainIndex, [Attachments])
1. Write attachments to attachment store
2. Write index entry to chain

### Reader

The Reader supports the methods:
**Scan** (filter) => simplest filter is FromTimestamp
   - Returns array of [ChainIndex keys]
**ReadMessage** (ChainIndex key)
   - Returns message
**GetAttachment** (Attachment ID)
   - Returns attachment object

### Garbage Collector

Documents that are no longer flagged to be retained are removed from the distributed store by the Garbage Collector and replaced with a stub.

### Keeper

The Keeper writes the hashes of checkpoint messages to a public blockchain.

### Endpoint Data Structures

### Users

Profiles
   ProfileAddr, Nickname, ISM, CAM
Contacts
   ProfileAddr, Nickname, Trust
Delegations
   ProfileAddr, DelegationProfile, Rights
Documents
   Object, Type, Classification, Meta
Service Offerings
   tbd
Provider Dossiers
   ProviderAddr: Serial:ConsumerAddr: Serial
Consumer Dossiers
   ProviderAddr: Serial:ConsumerAddr: Serial

### Messages

### Message Types

The dossier management system will work with several data types that will be referenced on the ledger.

### Ledger Index

The Ledger Index is the core structure used within the blockchain system (non-native BC structure) to manage the platform.

### Basic Message Submission Flow

Figure 5 shows the basic message submission flow as used in embodiments of the invention.

The message flow depicted represents the basic message submission process and describes how gatekeeping server 400 validates each message envelope before posting messages to the metadata/data store. A sharing node 10 sends a data sharing request to the gatekeeping server 400. If the signature of the message is validated and the sender is registered on the platform, the same verification is performed for the recipient node, and the public key of the recipient node is transmitted to the sharing node 10 (not shown). If the checks are successful, the message/data is encrypted by the sharing node and transmitted to the gatekeeping server 400, which submits it to the data/meta data stores 410, 420 respectively. Otherwise, the operation is aborted. An optional acknowledgement message may be sent back by the gatekeeping server upon successful completion of the task. This corresponds to method steps a)-f) as outlined in figure 1a.

### Messages are sent to gatekeeping server.

Gatekeeping server 400 validates the RSA signature on the envelope and discards the message if it is not valid. In this case there is no reply.

If the sender's public key is not yet registered on the system repository, gatekeeping server will drop the message - unless the message is an invitation response, in which case it processes the message (see invitation sequence below).

Once the sender has been vetted, gatekeeping server checks the recipient addresses, if any are invalid or bad, the message is dropped and a NOK reply is given. If all are good or if the message is public and of an acceptable type for public use, the message is sent to the data/metdata stores and an ACK is returned.

### Envelope Format

### [PK] sender:MessageHash:Timestamp

Note: HMAC-SHA256 calculations use *salt* values from the message structure as the secret key for their calculation. PM salt values are 40 byte entropy generated values.

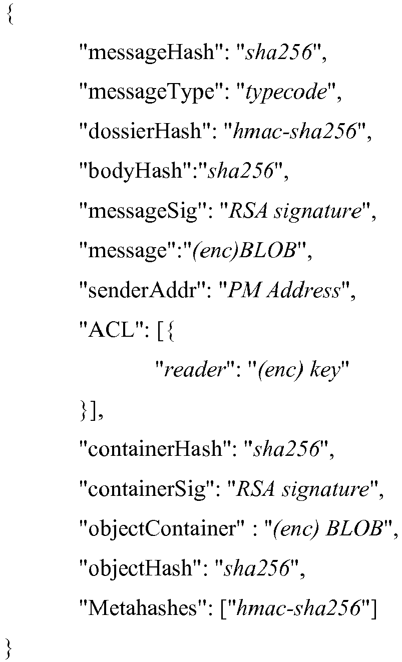

### Description of Fields

| **Field** | **Expected Values** | **Description** |
|---|---|---|
| **messageHash** | SHA-256 hash | SHA-256 result on encrypted message payload |
| **messageType** | Bigint | PM Message Type (see table) |
| **bodyHash** | SHA-256 hash | SHA-256 result on decrypted message payload |
| **dossierHash** | SHA-256 hash | Salted dossier ID hash (see below) |
| **sender** | PM Address | Peer Mountain address of sender |
| **messageSig** | RSA Signature | Calculated on message object |
| **(enc) message** | Bytes | Normally encrypted bytestream of message (see below for format) |
| **reader** | PM Address or 0 | Peer Mountain recipient address or 0 for public |
| **(enc) key** | Decryption Key or 0 | Message Key or 0 for public |
| **containerHash** | SHA-256 hash or 0 | SHA-256 result on (enc) container 0 for none |
| **containerSig** | RSA Signature | Calculated on container object |
| **(enc) container** | Bytes | Normally encrypted bytestream of attachment (see below for format) stored off-chain and **replaced with URI in chain** |
| **object hash** | SHA-256 hash or 0 | SHA-256 on decrypted object or 0 for none |
| **meta hash** | SHA-256 hash or 0 | SHA-256 on each meta element or 0 for none, some will be salted |

### Message Format (encrypted in envelope)

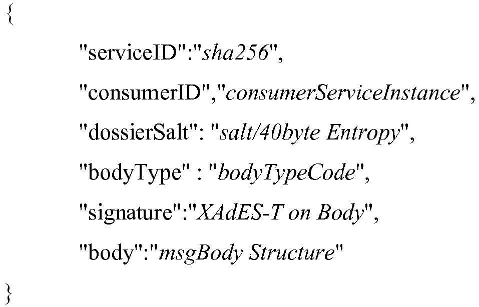

### Description of Fields

| **Field** | **Expected Values** | **Description** |
|---|---|---|
| **serviceID** | BigInt | Provider's service offering msg ID |
| **consumerID** | BigInt | Consumer's service instance |
| **dossierSalt** | 40 bytes | 40 byte dossier salt |
| **bodyType** | Bigint | PM Message Type ID (see table) |
| **XAdES-T on Body** | XAdES-T | Signature for Body |
| **body** | PM Body Structure | Message body, based on type |

### Structure

### URL+HASH should retrieve AttachmentObject

The ChainIndex may be replicated/stored by the BC system in an HBase table to facilitate reading [PK] PublishingID:MessageHash:BlockReference:Timestamp

### Detailed Message Body Formats

Figure 6 illustrates how invitations and registration are handled in accordance with embodiment of the invention.

The Inviter 15 prepares the Invite Registration and sends the message with the appropriate ACL (public or private invitations are possible).

The Inviter communicates the invitation to a prospect 10 using any separate secure channel through which they may communicate (QR code, email, sms, etc).

Using the invite, the new client gets the bootstrap info and requests the pubkey of the bootstrap gatekeeping server node 500. Upon receiving the key, the client validates the key against the bootstrapAddr (preventing MITM attacks) and then uses this compose the Registration Request message.

Using the provided secrets, gatekeeping server 500 decrypts and validates the invitation and, if good, registers the client's public key with the metadata store/data store 520, 510 by relaying the Registration Req for recording.

An optional ACK is sent back to the client which then can commence a new message sequence using the service message information in order to consume the service proposed.

### Invite Registration

The invite registration is a message sent to public (no ACL), to a Teleferique for a restrictred new user invite or a restricted set of existing users for a new service proposal.

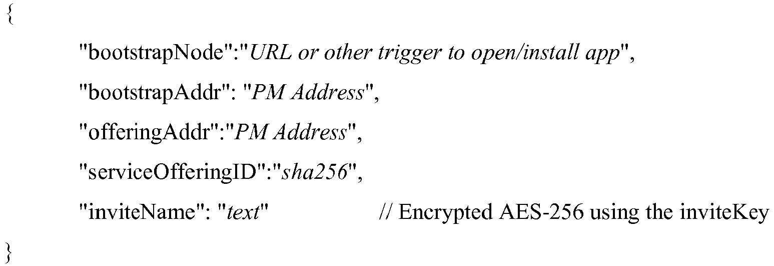

### Invitation (communicated offline)

The off-line invitation consists of the following structure communicated to the invitee in clear using any external system to communicate with the prospect: print, online, etc.

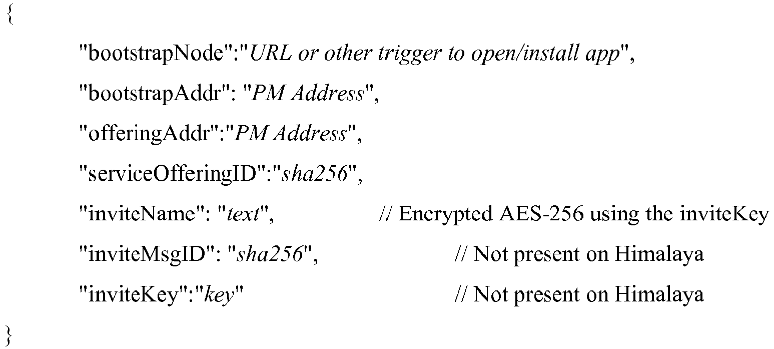

### Description of Fields

| **Field** | **Expected Values** | **Description** |
|---|---|---|
| **bootstrapNode** | URL | Address of bootstrap Teleferique |
| **bootstrapAddr** | PM Address | Address of Teleferique (for pub key retrieval) |
| **offeringAddr** | PM Address | Persona legally offering the service |
| **serviceOfferingID** | Service Offering | Service Offering Message ID |
| **inviteName** | Text | Friendly name of the invitation |
| **inviteMsgID** | SHA256 or not present | Not present in invitation registration |
| **inviteKey** | 40 byte key | Not present in invitation registration |

### Invitation Response / Registration Request

When a profile first contacts the bootstrap node, it calls getPubKeyForAddr(bootstrapAddr) and requests the PubKey of the gatekeeping server instance, if it does not already have it.

Once received the client sends the registration request. Gatekeeping server verifies the invite message by checking the decrypted InviteName against the provided name, if successful, the registration message is written to the ledger.

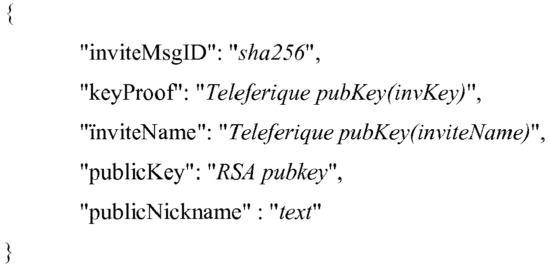

### Description of Fields

| **Field** | **Expected Values** | **Description** |
|---|---|---|
| **inviteMsgID** | SHA-256 hash | The message ID of the invitation |
| **keyProof** | Enc blob | inviteKey encrypted by the deployment machine persona publicKey |
| **inviteName** | Enc blob | Invitation name encrypted by the deployment machine persona publicKey |
| **publicKey** | RSA-4096 Pub Key | Persona's public key |
| **publicNick** | text | Friendly nick name for the Persona |

### Checkpoint

Contains meta-Information on public BC registration of previously stored checkpoint

### Recovery Quorum Message

Recovery mechanisms are used in case a user identity loses access to one of they keys. Scenarios:
Passphrase + no quorum: Store directly
Passphrase + single quorum: Store in msg to single
Passphrase + multi quorum: Stripe and store in msg to multi
No passphrase + multi-quorum: Stripe and store in msg to multi
Note: Quorum profiles cannot be own delegates and should not come from same base profile.

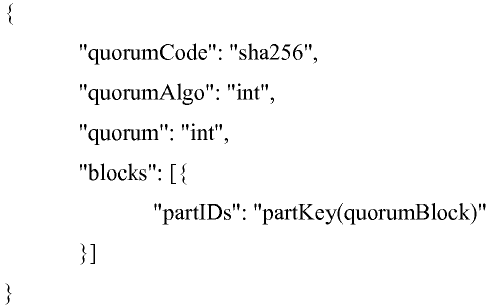

### Description of Fields

| **Field** | **Expected Values** | **Description** |
|---|---|---|
| **quorumCode** | SHA-256 | SHA-256 on quorum recovery phrase |
| **quorumAlgo** | Int | Quorum algorithm selector |
| **quorum** | Int | Number of participants required |
| **blocks** | Structure partID+key | The recoveryblocks |
| **partIDs** | PM address | Participant Addresses |
| **partkey(quorumBlock)** | Binary | Recovery data block encrypted by Participant Public Key (blocks are determined by Algo) |

### Contains private key symmetrically encrypted with optional offline passphrase

1/x * y/x chunks striped per Quorum member where x = trust pool and y = min. quorum. Assertion

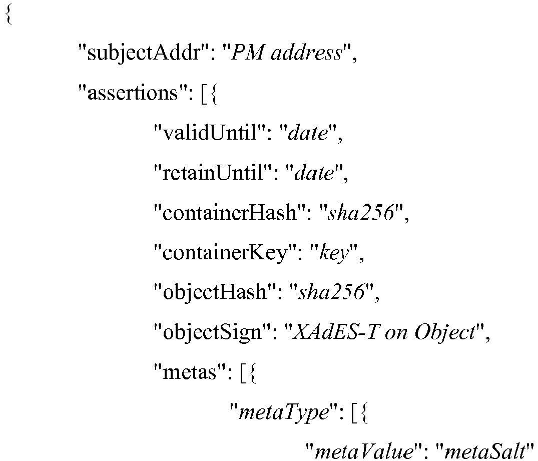

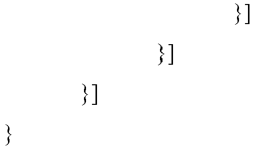

### Description of Fields

| **Field** | **Expected Values** | **Description** |
|---|---|---|
| **subjectAddr** | PM Address | Persona for the assertion |
| **validUntil** | Unix timestamp, 0 or -1 | ZULU time, 0 for none, -1 for indefinite, -2 for undetermined |
| **retainUntil** | Unix timestamp, 0 or -1 | ZULU time, 0 for none, -1 for indefinite, -2 for undetermined |
| **Container hash** | SHA-256 | SHA-256 on container |
| **Key** | AES-256 key | Decryption key for container |
| **Object hash** | SHA-256 | SHA-256 on Object |
| **XAdES-T on object** | XAdES-T | Signature for Object |
| **Meta** | Array of metadata structures | |
| **Meta type** | Bigint | Meta element type (see table) |
| **Meta salt** | 40 bytes or "0" | A 40-byte salt value appended to meta-data in order to match public hash values, or 0 for unsalted. Metasalt should be generated using the crypto library entropy functions. |
| **Meta value** | Bytes | Meta data value |

### Meta Types

| **Type** | **Label** | **Value** | **Salted** |
|---|---|---|---|
| | MRZ | Document MRZ field | N |
| | Contact Reference | RFC 6350 vCard | N |
| | Name | String | Y |
| | Date of Birth | ISO 8601 Long UTC | Y |
| | Place of Birth | Geohash | Y |
| | Place of Residence | Geohash | Y |
| | Nationality | ISO 3166-1 numeric | Y |
| | Country of Birth | ISO 3166-1 numeric | Y |
| | Country of Residence | ISO 3166-1 numeric | Y |
| | Place of Business | ISO 3166-1 numeric | Y |
| | Pseudonym | String | Y |
| | Language Proficiency | ISO 639-1 char(2) code | Y |
| | ID Number | String | Y |
| | Document Type | BigInt | Y |
| | Document Number | String | Y |
| | Document Issuer | String | Y |
| | Document Issue Date | ISO 8601 Long UTC | Y |
| | Document Exp Date | ISO 8601 Long UTC | Y |
| | RegisteredAddress | String | Y |
| | Gender | Char - M, F or U | Y |
| | Occupation | Occupation Title | Y |
| | Birth Name | String | Y |
| | Family Name | String | Y |
| | Given Name | String | Y |
| | Eye Color | String | Y |
| | Hair Color | String | Y |
| | Height | String | Y |
| | Weight | String | Y |
| | Convicted Of | String | Y |
| | Position | String | Y |
| | Ethnicity | String | Y |
| | Product Produced | String | Y |
| | Inception | ISO 8601 Long UTC | Y |
| | Official Website | URL | Y |
| | Dissolution Date | ISO 8601 Long UTC | Y |
| | Political Alignment | String | Y |
| | Legal EntityID | ISO 17442 LEI | Y |
| | Total Revenue | String | Y |
| | Ticker Symbol | String | Y |
| | OpenCorporatesID | String | Y |
| | Legal Form | String | Y |
| | Employer | String | Y |
| | EmployerPersona | PM Address | Y |
| | Document Accepted | True/False | Y |
| | MRZ Accepted | True/False | Y |
| | IBAN | IBAN number | Y |
| | BIC | Bank Swift Code | Y |
| | AccountCurrency | ISO 4217 currency | Y |
| | ClientNumber | Text | Y |
| | CardNumber | 16 digit cc | Y |
| | CardExp | ISO 8601 Long UTC | Y |
| | CardCW | String | Y |
| | CardName | String | Y |
| | Match Object | SHA256 | Y |
| | MatchScore | Float | Y |

### Document Types

| **Type** | **Label** | **Description** |
|---|---|---|
| | General Document | |
| | Passport | |
| | Driver License | |
| | National ID | |
| | Regional Identity Card | |
| | Birth certificate | |
| | Social Security card | |
| | Residence Permit/Visa | |
| | Student Identity card | |
| | Government/Department of Defense Identification Card | |
| | Personal Qualification | |
| | Company Filing | |
| | Commercial Registration | |
| | Trade permit | |
| | Share registry | |
| | Vessel Registration Document | |
| | Vessel Insurance Document | |
| | | |
| | | |
| | Portrait Front | |
| | PresencePortraits | |
| | Portrait Side | |
| | Vessel Front | |
| | Vessel Port Side | |
| | Vessel Starboard Side | |
| | Vessel Rear | |
| | Vessel Identity Tas | |
| | PIV (video) | |
| | | |
| | Digital Footprint | |
| | | |
| | FATCA Form | |
| | MIFID II Form | |
| | Trading Form | |

### Identity Document Image:

### Statutory Document Image:

**Forms:** Xform is used to specify and transmit form information. Completed forms are signed (XAdES-T) and considered documents.

**Biometric Identity Object:** An object used for facial, fingerprint or voice recognition.

**Digital Footprint:** An object used for confirming the identity via context, including GPS location, paired devices (BT & WIFI), device IDs (IMSI, IMEA, MAC addr), and contacts/calls.

### Attestation

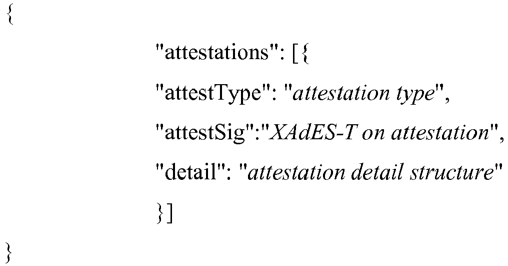

### Description of Fields

| **Field** | **Expected Values** | **Description** |
|---|---|---|
| **attestType** | Bigint | Attestation Type |
| **Result** | True/False | Valid or invalid attestation |
| **XAdES-T Attest** | XAdES-T structure | Calculated on following attestation |
| **Attestation** | Attestation Structure | See below |

### Attestation Structures

| **Type** | **Label** | **Description** |
|---|---|---|
| **1** | Message Analysis | Analyzes a single message for content accuracy |
| **2** | Message Comparison | Compares a message to one or more messages for specific analysis (all messages must have appropriate ACL!) |
| **3** | Research Analysis | Uses a message as input to query an external data source for additional information |
| **4** | Retraction/rej ection | Reject/retract a prior attestation |

### Message Analysis

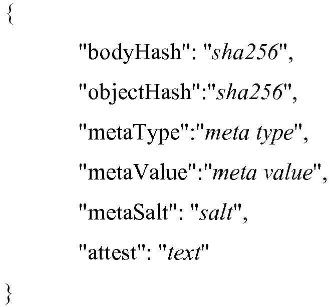

| **Field** | **Expected Values** | **Description** |
|---|---|---|
| **body hash** | SHA-256 | SHA-256 on container |
| **object hash** | SHA-256 | SHA-256 on object |
| **meta type** | Bigint | Meta element type (see table) |
| **meta value** | Bytes | Meta data value |
| **meta salt** | 40 bytes or "0" | A 40-byte salt value appended to meta-data in order to match public hash values, or 0 for unsalted. Metasalt should be generated using the crypto library entropy functions. |
| **Attest** | Text | Attestation qualifier text |

### Message Comparison

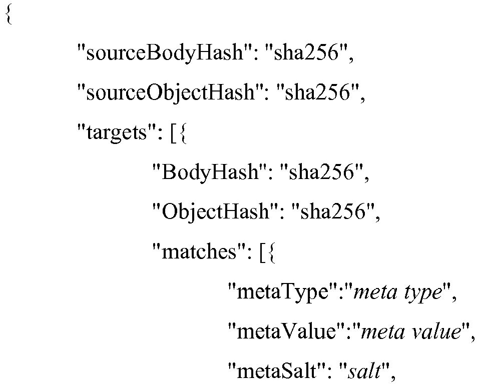

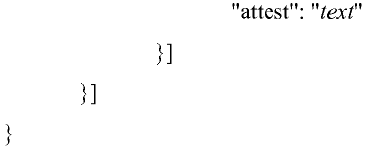

### External Risk Notification

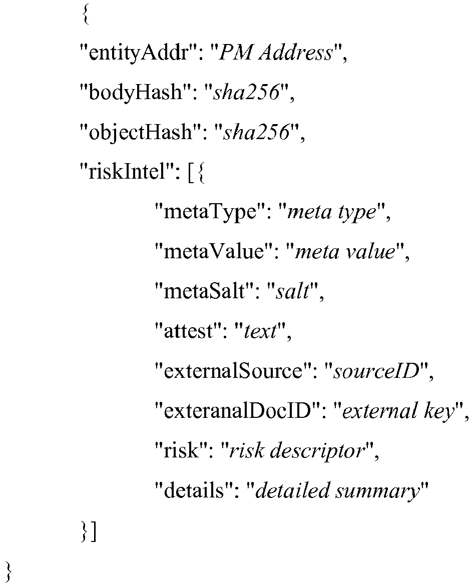

### Retraction / rejection

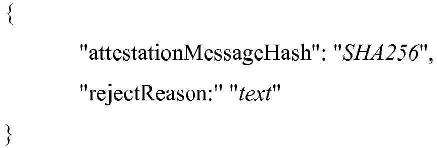

### External Risk Types

| **Type** | **Label** | **Description** |
|---|---|---|
| **1** | Sanction | |
| **2** | Conviction | |
| **3** | Political Exposure | |
| **4** | Financial Crime | |
| **5** | Terrorism Activity | |
| **6** | Negative Media | |
| **7** | Credit Event | |
| **8** | Suspicious Activity | |
| **10** | Jurisdictional Risk | |

### Service Offering and Dossier Messages

### Service Offering / Dossier Definition

Each service offering is identified with a key composed of the Unique Address of the Provider Persona and the Service Offering ID.
- Service Commercial Data
   o Marketing Description
   o Terms and Conditions
- Dossier Content Descriptor
   o Dossier Type
   o Required Forms, Trusted Assertion Provider Addresses
   o Required Documents, Trusted Assertion Provider Addresses
- Risk Matrix Reference
   o Risk rules

### Forms

XForms is the standard used to define the data input formats for each message.

### Document Types

### Generic Message (subject, message, attachments)

- Form Request/Response
- Contact Declaration (compatible for vCard 4.0 output)
- Passport Capture
- Identity Capture
- Owner Declaration
- Delegation Declaration
- Financial Declaration

### Data Capture

### Core Identity Data

Generated Data: Key-pair
Self-Declared Data: Public Name, Given Name, DOB, Place of Birth, Nationalities

### Identity and other Documents

### Existing Tech Example: AriadNext

- Photographic capture of document
- Data extraction via OCR and photograph extraction
- Data extraction via NFC
- Control of document via API/references

### Selfie Image

### Existing Tech Example: Kairos &/or OpenFace

- Compare Selfie to Identity Photo

### Digital Footprint

### Existing Tech Example: Hooyou

- Identifiers: Telephone Details, Email Addresses, Device Info (MAC, IMSE)
- Context: Contacts, Paired Bluetooth Devices, Wifi network list
- DeviceLocation: GPS, currently connected WIFI, current cell tower
- Attach Digital footprint (claim and verify accounts)
   ∘ Facebook https://developers.facebook.com/docs/facebook-login
   ∘ LinkedIn https://developer.linkedin.com/docs/signin-with-linkedin
   ∘ Google https://developers.goog)e.com/identity/
   ∘ MS/Skype https://msdn.microsoft.com/en-us/library/hh826537.aspx
   ∘ Twitter https://dev.twitter.com/web/sign-in
   ∘ Instagram https://www.instagram.com/developer/
   ∘ Reddit https://www.reddit.com/dev/api/
   ∘ VK https://vk.com/dev/openapi
   ∘ Odnoklassniki https://apiok.ru/ext/
   ∘ RenRen https://www.programmableweb.com/api/renren
   ∘ Weibo http://open.weibo.com/wiki/API%E6%96%87%E6%Al<%A3/en
   ∘ Qzone https://connect.qq.com/
- Post a message to "wall" with a nonce that is also shared on ledger.

### Attestations and Attestation Engines

Attestations may come from two sources: directly from clients or from attestation engines.

Attestations form clients are considered subjective from the client. The type and methods of attestations are limited only by the client implementation; however, common implementation is required for the attestation to be useful throughout the platform.

Attestation Engines are machine personas that accept specific messages and generate attestation outputs.

### Identity Document AE

Accepts identity document object. Assesses document authenticity and serializes elements into attestations for authentic documents.

### Identity Confirmation AE

Accepts 2 image objects and compares them using facial recognition.

### Video TAN AE

Generates TAN from spec, sends message to client with TAN statement, receives video message and compares response using speech-to-text.

### Sanctions List Exposure AE

Analyzes identity meta-details and provides sanction assessment.

### Political Exposure AE

Analyzes identity meta-details and provides sanction assessment.

### Press Review AE

Analyzes identity meta-data and provides press-coverage assessment.

### Geo-Risk Assessment AE

Analyzes geographic meta-data and provides risk assessment.

### TSA AE

Trusted time-stamping AE

### Delegation Assessment AE

Records delegation records sent to it.

Responds to messages requesting validation of delegation rights.

Based on the description and figures that have been provided, a person with ordinary skills in the art will be able to construct a computer program for implementing the described method steps without undue burden.

It should be understood that the detailed description of specific preferred embodiments is given by way of illustration only, since various changes and modifications within the scope of the invention will be apparent to the person skilled in the art. The scope of protection is defined by the following set of claims.

## Claims

1. A method for asynchronous traceable data sharing between a sharing node and at least one recipient node for use in a communication network, wherein the communication network comprises a first gatekeeping server (100) having access to a first metadata store (120), a first data store (110) and a first repository (130) comprising public keys associated with user entities, and wherein the method comprises the following steps:
a) first, at the first gatekeeping server (100), receiving a request (12) to share data with a recipient user entity from a sharing node (10) associated with a sharing user entity;
b) at the first gatekeeping server (100), retrieving a cryptographic public key associated with the recipient user entity from said repository (130) and transmitting the key (21) to the sharing node (10);
c) at the sharing node (10), receiving said public key (21), and encrypting at least part of the data using the recipient user entity's public key;
d) transmitting said encrypted data (14), and metadata (16) associated with said encrypted data, comprising a hash of the encrypted data or of said data, from the sharing node (10) to the first gatekeeping server (100);
e) at the first gatekeeping server (100), receiving the encrypted data (14) and storing it in the first data store (110);
f) at the first gatekeeping server (100), receiving the metadata and storing it in the first metadata store (120), including an address of said encrypted data in said first data store;
g) at the first gatekeeping server (100), subsequently receiving a data retrieval request from a recipient node (20) associated with said recipient user entity, retrieving said address from the first metadata store (120), retrieving said encrypted data (14) at said address from said first data store (110), and transmitting said encrypted data (14) to the recipient node (20).

2. Method according to claim 1, wherein at least part of said data (14) and/or metadata (16) is cryptographically signed using the sharing user entity's private key prior to transmitting it to the first gatekeeping server.

3. Method according to any of claims 1 o 2, wherein said metadata further comprises any of a hash of at least part of the metadata (16), or any combination of these.

4. Method according to any of claims 1 to 3, wherein said metadata (16) comprises a validity timestamp comprising an indication of time and/or date, and wherein the first gatekeeping node (100) is configured to not provide access to any recipient node (20), once the time corresponding to said timestamp has lapsed.

5. The method according to claim 4, wherein the first gatekeeping node (100) is further configured to remove the corresponding encrypted data (14) from said data store (110) once the time corresponding to said timestamp has lapsed.

6. Method according to any of claims 1 to 5, wherein the communication network further comprises a second gatekeeping server having access to a second metadata store, a second data store and a second repository comprising public keys associated with user entities, wherein at least the sharing node is associated respectively with a sharing user entity in both the first and second repository,
wherein the data to be shared is stored on said second metadata and/or data store, the method further comprising the following step prior to step a):
- at the second gatekeeping server, receiving a data retrieval request from said sharing node associated with said sharing user entity, retrieving the address for said data from the second metadata store, retrieving said encrypted data from said second data store, and transmitting said encrypted data to the sharing node.

7. Method according to any of claims 1 to 6, wherein the recipient node (20) is further configured to verify the content of at least part of said retrieved data, to cryptographically sign said part of data with the associated recipient user's private key, and to share said signed part of data with the original sharing node and/or a third-party node using the method of claim 1.

8. Method according to any of claims 1 to 7, wherein said metadata store (120) is immutable, so that metadata once stored therein, may not be altered.

9. Method according to any of claims 1 to 8, wherein said metadata store (120) comprises at least one blockchain that is implemented by a plurality of nodes in said communication network, and wherein the gatekeeping server (100) has exclusive write/read permissions on said blockchain.

10. Method according to any of claims 1 to 9, wherein said data store (110) comprises at least one database structure.

11. Method according to any of claims 1 to 10, wherein said shared data and/or metadata comprises a data structure.

12. Method according to any of claims 1 to 11, wherein said shared data comprises instructions, and wherein said recipient node is configured to execute a predetermined computer program code upon retrieval of said data, the computer program code depending on said instructions.

13. Method according to any of claims 1 to 12, wherein said recipient node is the sharing node or the gatekeeping server.

14. A gatekeeping method for use in a communication network configured for asynchronous traceable data sharing between a sharing node (10) and at least one recipient node (20), wherein a gatekeeping server (100) has access to a metadata store (120), a data store (110) and a repository (130) comprising public keys associated with user entities, the method comprising the following steps:
i) at the gatekeeping server (100), receiving a request to share data (12) with a recipient user entity from a sharing node (10) associated with a sharing user entity;
ii) at the gatekeeping server (100), retrieving a cryptographic public key associated with the recipient user entity from the repository (130) and transmitting it (21) to the sharing node (10);
iii) at the gatekeeping server (100), receiving encrypted data from said sharing node (10) and storing it in the data store (110);
iv) at the gatekeeping server (100), receiving metadata from said sharing node, comprising a hash of the encrypted data or of said data, and storing it in the metadata store (120), including an address of said encrypted data in said data store (110),
v) at the gatekeeping server (100), subsequently receiving a data retrieval request from a recipient node (20) associated with said recipient user entity, retrieving said address from the metadata store (120), retrieving said encrypted data (14) from the data store (110), and transmitting the encrypted data (14) to the recipient node (20).

15. A computer comprising computer program code configured for carrying out the method according claim 14.

## Patentansprüche

1. Verfahren für das asynchrone nachvollziehbare Teilen von Daten zwischen einem teilenden Knoten und mindestens einem Empfängerknoten zur Verwendung in einem Kommunikationsnetz, wobei das Kommunikationsnetz einen ersten Gatekeeping-Server (100) umfasst, der Zugriff auf einen ersten Metadatenspeicher (120), einen ersten Datenspeicher (110), und einen ersten Verwahrungsort (130) hat, der öffentliche Schlüssel umfasst, die Benutzerentitäten zugeordnet sind, und wobei das Verfahren die folgenden Schritte umfasst:
a) zuerst, am ersten Gatekeeping-Server (100), Empfangen einer Anfrage (12), um Daten mit einer Empfängerbenutzerentität zu teilen, von einem teilenden Knoten (10), der einer teilenden Benutzerentität zugeordnet ist;
b) am ersten Gatekeeping-Server (100), Abrufen eines kryptografischen öffentlichen Schlüssels, der der Empfängerbenutzerentität zugeordnet ist, aus dem Verwahrungsort (130) und Übertragen des Schlüssels (21) an den teilenden Knoten (10);
c) Empfangen des öffentlichen Schlüssels (21) am teilenden Knoten (10) und Verschlüsseln mindestens eines Teils der Daten unter Verwendung des öffentlichen Schlüssels der Empfängerbenutzerentität;
d) Übertragen der verschlüsselten Daten (14) und der den verschlüsselten Daten zugeordneten Metadaten (16), die einen Hash der verschlüsselten Daten oder der Daten umfassen, von dem teilenden Knoten (10) an den ersten Gatekeeping-Server (100);
e) am ersten Gatekeeping-Server (100), Empfangen der verschlüsselten Daten (14) und Speichern derselben im ersten Datenspeicher (110);
f) am ersten Gatekeeping-Server (100), Empfangen der Metadaten und Speichern derselben im ersten Metadatenspeicher (120), einschließlich einer Adresse der verschlüsselten Daten im ersten Datenspeicher;
g) am ersten Gatekeeping-Server (100), anschließendes Empfangen einer Datenabrufanforderung von einem Empfängerknoten (20), der der Empfängerbenutzerentität zugeordnet ist, Abrufen der Adresse aus dem ersten Metadatenspeicher (120), Abrufen der verschlüsselten Daten (14) an der Adresse von dem ersten Datenspeicher (110) und Übertragen der verschlüsselten Daten (14) an den Empfängerknoten (20).

2. Verfahren nach Anspruch 1, wobei zumindest ein Teil der Daten (14) und/oder Metadaten (16) unter Verwendung des privaten Schlüssels der teilenden Benutzerentität kryptografisch signiert wird, bevor sie an den ersten Gatekeeping-Server übertragen werden.

3. Verfahren nach einem der Ansprüche 1 oder 2, wobei die Metadaten ferner einen Hash von mindestens einem Teil der Metadaten (16) oder eine beliebige Kombination davon umfassen.

4. Verfahren nach einem der Ansprüche 1 bis 3, wobei die Metadaten (16) einen Gültigkeitszeitstempel umfassen, der eine Zeit- und/oder Datumsangabe umfasst, und wobei der erste Gatekeeping-Knoten (100 ) so konfiguriert ist, dass er keinem Empfängerknoten (200) Zugriff gewährt, sobald die dem Zeitstempel entsprechende Zeit verstrichen ist.

5. Verfahren nach Anspruch 4, wobei der erste Gatekeeping-Knoten (100) ferner so konfiguriert ist, dass er die entsprechenden verschlüsselten Daten (14) aus dem Datenspeicher (110) entfernt, sobald die dem Zeitstempel entsprechende Zeit verstrichen ist.

6. Verfahren nach einem der Ansprüche 1 bis 5, wobei das Kommunikationsnetzwerk ferner einen zweiten Gatekeeping-Server umfasst, der Zugriff auf einen zweiten Metadatenspeicher, einen zweiten Datenspeicher und einen zweiten Verwahrungsort hat, der öffentliche Schlüssel umfasst, die Benutzerentitäten zugeordnet sind.
wobei zumindest der teilende Knoten jeweils mit einer teilenden Benutzerentität sowohl im ersten als auch im zweiten Verwahrungsort assoziiert ist,
wobei die zu teilenden Daten in dem zweiten Metadaten- und/oder Datenspeicher gespeichert sind, wobei das Verfahren ferner den folgenden Schritt vor Schritt a) umfasst:
- am zweiten Gatekeeping-Server, Empfangen einer Datenabrufanforderung von dem mit der teilenden Benutzerentität assoziierten teilenden Knoten, Abrufen der Adresse für die Daten aus dem zweiten Metadatenspeicher, Abrufen der verschlüsselten Daten aus dem zweiten Datenspeicher und Übertragen der verschlüsselten Daten zum teilenden Knoten.

7. Verfahren nach einem der Ansprüche 1 bis 6, wobei der Empfängerknoten (20) ferner so konfiguriert ist, dass er den Inhalt mindestens eines Teils der abgerufenen Daten verifiziert, den Teil der Daten kryptografisch mit dem privaten Schlüssel des zugeordneten Empfängerbenutzers signiert und um den signierten Teil der Daten mit dem ursprünglichen teilenden Knoten und/oder einem Dritt-Knoten unter Verwendung des Verfahrens nach Anspruch 1 zu teilen.

8. Verfahren nach einem der Ansprüche 1 bis 7, wobei der Metadatenspeicher (120) unveränderlich ist, so dass einmal darin gespeicherte Metadaten nicht geändert werden können.

9. Verfahren nach einem der Ansprüche 1 bis 8, wobei der Metadatenspeicher (120) mindestens eine Blockchain umfasst, die durch mehrere Knoten in dem Kommunikationsnetzwerk implementiert wird, und wobei der Gatekeeping-Server (100) exklusive Schreib/Leseberechtigungen auf dieser Blockchain hat.

10. Verfahren nach einem der Ansprüche 1 bis 9, wobei der Datenspeicher (110) mindestens eine Datenbankstruktur umfasst.

11. Verfahren nach einem der Ansprüche 1 bis 10, wobei die geteilten Daten und/oder Metadaten eine Datenstruktur umfassen.

12. Verfahren nach einem der Ansprüche 1 bis 11, wobei die geteilten Daten Anweisungen umfassen und wobei der Empfängerknoten so konfiguriert ist, dass er beim Abrufen der Daten einen vorbestimmten Computerprogrammcode ausführt, wobei der Computerprogrammcode von den Anweisungen abhängt.

13. Verfahren nach einem der Ansprüche 1 bis 12, wobei der Empfängerknoten der teilende Knoten oder der Gatekeeping-Server ist.

14. Gatekeeping-Verfahren zur Verwendung in einem Kommunikationsnetzwerk, das für dss asynchrone nachvollziehbare Teilen von Daten zwischen einem teilenden Knoten (10) und mindestens einem Empfängerknoten (20) konfiguriert ist, wobei ein Gatekeeping-Server (100) Zugriff auf einen Metadatenspeicher (120), einen Datenspeicher (110) und einen Verwahrungsort (130) hat, der öffentliche Schlüssel umfasst, die Benutzerentitäten zugeordnet sind, wobei das Verfahren die folgenden Schritte umfasst:
i) am Gatekeeping-Server (100), Empfangen einer Anforderung zum Teilen von Daten (12) mit einer Empfängerbenutzerentität von einem teilenden Knoten (10), der einer teilenden Benutzerentität zugeordnet ist;
ii) am Gatekeeping-Server (100), Abrufen eines kryptografischen öffentlichen Schlüssels, der der Empfängerbenutzerentität zugeordnet ist, aus dem Verwahrungsort (130) und Übertragen desselben (21) an den teilenden Knoten (10);
iii) am Gatekeeping-Server (100), Empfangen verschlüsselter Daten von dem teilenden Knoten (10) und Speichern derselben in dem Datenspeicher (110);
iv) am Gatekeeping-Server (100), Empfangen von Metadaten von dem teilenden Knoten, die einen Hash der verschlüsselten Daten oder der Daten umfassen, und Speichern derselben in dem Metadatenspeicher (120), einschließlich einer Adresse der verschlüsselten Daten in den Datenspeicher (110),
v) am Gatekeeping-Server (100), anschließendes Empfangen einer Datenabrufanforderung von einem Empfängerknoten (20), der der Empfängerbenutzerentität zugeordnet ist, Abrufen der Adresse aus dem Metadatenspeicher (120), Abrufen der verschlüsselten Daten (14) aus dem Datenspeicher (110) und Übertragen der verschlüsselten Daten (14) an den Empfängerknoten (20).

15. Computer mit Computerprogrammcode, der zum Ausführen des Verfahrens nach Anspruch 14 konfiguriert ist.

## Revendications

1. Procédé de partage asynchrone traçable de données entre un noeud de partage et au moins un noeud destinataire pour une utilisation dans un réseau de communication, dans lequel le réseau de communication comprend un premier serveur de contrôle d'accès (100) ayant accès à un premier magasin de métadonnées (120), un premier magasin de données (110) et un premier référentiel (130) comprenant des clés publiques associées à des entités utilisatrices, et dans lequel le procédé comprend les étapes suivantes :
a) premièrement, au niveau du premier serveur de contrôle d'accès (100), recevoir une requête (12) pour partager des données avec une entité utilisatrice destinataire depuis un noeud de partage (10) associé à une entité utilisatrice partageuse ;
b) au niveau du premier serveur de contrôle d'accès (100), récupérer une clé publique cryptographique associée à l'entité utilisatrice destinataire dudit référentiel (130) et transmettre la clé (21) au noeud de partage (10) ;
c) au niveau du noeud de partage (10), recevoir ladite clé publique (21), et chiffrer au moins une partie des données à l'aide de la clé publique de l'entité utilisatrice destinataire ;
d) transmettre lesdites données cryptées (14) et les métadonnées (16) associées auxdites données cryptées, comprenant un hachage des données cryptées ou desdites données, du noeud de partage (10) au premier serveur de contrôle d'accès (100) ;
e) au niveau du premier serveur de contrôle d'accès (100), recevoir les données cryptées (14) et les stocker dans le premier magasin de données (110) ;
f) au niveau du premier serveur de contrôle d'accès (100), recevoir les métadonnées et les stocker dans le premier magasin de métadonnées (120), y compris une adresse desdites données cryptées dans ledit premier magasin de données ;
g) au niveau du premier serveur de contrôle d'accès (100), recevoir ensuite une demande de récupération de données d'un noeud destinataire (20) associé à ladite entité utilisatrice destinataire, récupérer ladite adresse à partir du premier magasin de métadonnées (120), récupérer lesdites données cryptées (14) à ladite adresse depuis ledit premier magasin de données (110), et transmettre lesdites données cryptées (14) au nœud destinataire (20).

2. Procédé selon la revendication 1, dans lequel au moins une partie desdites données (14) et/ou métadonnées (16) est signée cryptographiquement à l'aide de la clé privée de l'entité utilisatrice partageuse avant de la transmettre au premier serveur de contrôle d'accès.

3. Procédé selon l'une quelconque des revendications 1 ou 2, dans lequel lesdites métadonnées comprennent en outre l'un quelconque d'un hachage d'au moins une partie des métadonnées (16), ou toute combinaison de celles-ci.

4. Procédé selon l'une quelconque des revendications 1 à 3, dans lequel lesdites métadonnées (16) comprennent un horodatage de validité comprenant une indication d'heure et/ou de date, et dans lequel le premier noeud de contrôle d'accès (100) est configuré pour ne fournir l'accès à aucun noeud destinataire (20), si le temps correspondant audit horodatage s'est écoulé.

5. Procédé selon la revendication 4, dans lequel le premier noeud de contrôle d'accès (100) est en outre configuré pour supprimer les données chiffrées correspondantes (14) dudit magasin de données (110) une fois que le temps correspondant audit horodatage s'est écoulé.

6. Procédé selon l'une quelconque des revendications 1 à 5, dans lequel le réseau de communication comprend en outre un deuxième serveur de contrôle d'accès ayant accès à un deuxième magasin de métadonnées, un deuxième magasin de données et un deuxième référentiel comprenant des clés publiques associées à des entités utilisatrices,
dans lequel au moins le iioeud de partage est associé respectivement à une entité utilisatrice de partage à la fois dans le premier et le second référentiel,
dans lequel les données à partager sont stockées sur ledit deuxième magasin de métadonnées et/ou de données, le procédé comprenant en outre l'étape suivante avant l'étape a) :
- au niveau du deuxième serveur de contrôle d'accès, recevoir une demande de récupération de données dudit noeud de partage associé à ladite entité utilisatrice partageuse, récupérer l'adresse pour lesdites données du deuxième magasin de métadonnées, récupérer lesdites données cryptées dudit deuxième magasin de données, et transmettre lesdites données cryptées au noeud de partage.

7. Procédé selon l'une quelconque des revendications 1 à 6, dans lequel le noeud destinataire (20) est en outre configuré pour vérifier le contenu d'au moins une partie desdites données récupérées, pour signer cryptographiquement ladite partie de données avec la clé privée de l'utilisateur destinataire associé, et pour partager ladite partie signée de données avec le noeud de partage d'origine et/ou un noeud tiers en utilisant le procédé de la revendication 1.

8. Procédé selon l'une quelconque des revendications 1 à 7, dans lequel ledit magasin de métadonnées (120) est immuable, de sorte que les métadonnées une fois stockées dans celui-ci, ne peuvent pas être altérées.

9. Procédé selon l'une quelconque des revendications 1 à 8, dans lequel ledit magasin de métadonnées (120) comprend au moins une chaîne de blocs qui est mise en oeuvre par une pluralité de noeuds dans ledit réseau de communication, et dans lequel le serveur de contrôle d'accès (100) dispose d'un accès exclusif en écriture/lecture sur ladite chaîne de blocs.

10. Procédé selon l'une quelconque des revendications 1 à 9, dans lequel ledit magasin de données (110) comprend au moins une structure de base de données.

11. Procédé selon l'une quelconque des revendications 1 à 10, dans lequel lesdites données et/ou métadonnées partagées comprennent une structure de données.

12. Procédé selon l'une quelconque des revendications 1 à 11, dans lequel lesdites données partagées comprennent des instructions, et dans lequel ledit noeud destinataire est configuré pour exécuter un code de programme informatique prédéterminé lors de la récupération desdites données, le code de programme informatique dépendant desdites instructions.

13. Procédé selon l'une quelconque des revendications 1 à 12, dans lequel ledit noeud destinataire est le noeud partageur ou le serveur de contrôle d'accès.

14. Procédé de contrôle d'accès à utiliser dans un réseau de communication configuré pour le partage de données traçable asynchrones entre un noeud de partage (10) et au moins un noeud destinataire (20), dans lequel un serveur de contrôle d'accès (100) a accès à un magasin de métadonnées (120), un magasin de données (110) et un référentiel (130) comprenant des clés publiques associées à des entités utilisatrices, le procédé comprenant les étapes suivantes :
i) au niveau du serveur de contrôle d'accès (100), recevoir une demande de partage de données (12) avec une entité utilisatrice destinataire en provenance d'un noeud de partage (10) associé à une entité utilisatrice partageuse ;
ii) au niveau du serveur de contrôle d'accès (100), récupérer une clé publique cryptographique associée à l'entité utilisatrice destinataire à partir du référentiel (130) et la transmettre (21) au noeud de partage (10) ;
iii) au niveau du serveur de contrôle d'accès (100), recevoir des données cryptées dudit noeud de partage (10) et les stocker dans le magasin de données (110) ;
iv) au niveau du serveur de contrôle d'accès (100), recevoir des métadonnées dudit noeud de partage, comprenant un hachage des données chiffrées ou desdites données, et les stocker dans le magasin de métadonnées (120), incluant une adresse desdites données chiffrées dans ledit magasin de données (110) ;
v) au niveau du serveur de contrôle d'accès (100), recevoir ensuite une demande de récupération de données d'un noeud destinataire (20) associé à ladite entité utilisatrice destinataire, récupérer ladite adresse du magasin de métadonnées (120), récupérer lesdites données cryptées (14) du magasin de données (110), et transmettre les données cryptées (14) au noeud destinataire (20).

15. Ordinateur comprenant un code de programme informatique configuré pour mettre en oeuvre le procédé selon la revendication 14.
